# EUROPEAN PATENT SPECIFICATION

(11) **EP 2 737 217 B1**
(45) Date of publication and mention of the grant of the patent: **09.09.2015**
(21) Application number: 12745436.1
(22) Date of filing: 26.07.2012
(51) Int. Cl.: F15B 11/17

(54) **HYDRAULIC MOTOR-PUMP-ARRANGEMENT AND HYDRAULIC SYSTEM FOR A VEHICLE**
HYDRAULISCHE MOTORPUMPENANORDNUNG UND HYDRAULIKSYSTEM FÜR EIN FAHRZEUG
AGENCEMENT MOTEUR-POMPE HYDRAULIQUE ET SYSTÈME HYDRAULIQUE POUR UN VÉHICULE

(30) Priority: 26.07.2011 DE 102011108535; 26.07.2011 US 201161511609 P
(43) Date of publication of application: 04.06.2014
(73) Proprietor: Airbus Operations GmbH, 21129 Hamburg (DE); Airbus Operations S.A.S., 31060 Toulouse (FR)
(72) Inventor: HARTEN, Oliver, 27476 Cuxhaven (DE); DESCHEEMAEKER, Denis, F-31700 Blagnac (FR); HOFFMANN, Lars, 28816 Stuhr (DE); LAUCKNER, Sebastian, 22607 Hamburg (DE)
(74) Representative: Maiwald Patentanwalts GmbH
(86) International application number: PCT/EP2012/064663
(87) International publication number: WO 2013/014224

(56) References cited:
- EP-A1- 1 332 964
- GB-A- 1 467 661
- US-A- 2 775 204

## Description

### REFERENCE TO RELATED APPLICATIONS

The present application claims the priority of the United States Provisional Patent Application No. 61/511,609, filed 26 July 2011, and of German Patent Application No. 10 2011 108 535.5 filed 26 July 2011.

### TECHNICAL FIELD

The invention relates to a hydraulic motor-pump arrangement and hydraulic system for a vehicle.

### BACKGROUND OF THE INVENTION

For providing hydraulic power that is defined by a fluid pressure and a fluid volume flow rate in a hydraulic system, it is common practice to utilize different types of hydraulic pumps that are driven by a drive unit. Depending on the installation environment of the hydraulic system and the individual requirements to be fulfilled by the hydraulic system, the drive unit may be realized, for example, in the form of an electric motor or an internal combustion engine. In hydraulic systems of aircraft, it is furthermore known to utilize hydraulic pumps that are driven by one or more main engines of the aircraft. In order to make available sufficient hydraulic power during load peaks and to enhance the redundancy, it is furthermore known to additionally utilize hydraulic pumps that are driven by an electric motor. It is furthermore known to drive a hydraulic pump by means of a ram-air turbine in order to enhance the redundancy.

In a hydraulic system of an aircraft that consists of several independent subsystems, it is furthermore known to transfer hydraulic power from one hydraulic subsystem into another hydraulic subsystem by means of a power transfer unit (also referred to as "Power Transfer Unit," PTU). This is realized in that the respective hydraulic subsystem supplying the hydraulic power operates a hydraulic motor that drives a hydraulic pump in the hydraulic subsystem receiving the hydraulic power via a shaft.

DE 197 457 47 A1 furthermore discloses a system for the bidirectional conversion of electric and hydraulic power. Systems of this type are frequently used in modern commercial aircraft.

### SUMMARY OF THE INVENTION

Due to the limited availability of structural space, the most compact construction possible and the least weight possible should be realized when designing a hydraulic system in a vehicle and, in particular, in a commercial aircraft so as to prevent the driving or flying characteristics of the vehicle from being unduly affected. Although the parallel utilization of hydraulic pumps driven by internal combustion engines and electric motors, as well as of a power transfer unit with hydraulic motor-pump units in a hydraulic system with two or more hydraulic subsystems, results in very high operational reliability and flexibility, it requires an arrangement of several parallel pumps and motors that result in a corresponding weight. Consequently, such a hydraulic system apparently has an optimization potential with respect to the system weight.

It is the object of the invention to propose a device that can improve the operation of a hydraulic system consisting of two or more hydraulic subsystems and should minimize its weight. The object of the invention can also be seen in proposing an improved hydraulic system.

This object is met by an arrangement for selectively making available hydraulic power in separate hydraulic circuits with the characteristics of independent claim 1. Advantageous enhancements are disclosed in the dependent claims.

According to the invention, the arrangement comprises a first displacement machine, a second displacement machine, a first free-wheel, a second free-wheel and a drive unit. The drive unit is connected to the first displacement machine via the first free-wheel and to the second displacement machine via the second free-wheel, wherein the first free-wheel and the second free-wheel are designed in such a way that the first displacement machine is drivable when the drive unit rotates in a first rotating direction and the second displacement machine is drivable when the drive unit rotates in a second, opposite rotating direction.

In the context of the invention, the term displacement machine includes all hydraulic devices, in which a displacement volume acted upon by a hydraulic fluid dynamically changes in order to convey a hydraulic fluid through a mechanical drive on a moving component of the displacement machine or to initiate a mechanical motion of the moving component by introducing a pressurized hydraulic fluid. In this case, the moving component may be any movable element that draws, supplies or converts mechanical power in the displacement machine. There basically exist rotary displacement machines with cyclically changing cell volumes and reciprocating displacement machines with movable pistons. Displacement machines may be realized in the form of motors or pumps or, depending on their design, in the form of displacement machines that can be selectively used as a motor or as a pump. Axial piston machines that represent reciprocating displacement machines and can receive or supply volume flows due to the variable inclination of a wobble plate, a swash plate or a rotational axis appear particularly suitable for use in hydraulic systems.

Due to its two separate displacement machines, this arrangement according to the invention can be simultaneously used in two independent hydraulic subsystems of a hydraulic system. The utilization of the two free-wheels makes it possible to realize a selective conversion of mechanical power into hydraulic power for either a first or a second hydraulic subsystem by choosing the rotating direction accordingly. Due to the utilization of mechanically simple, but still robust and reliable free-wheels, it is not necessary to carry along two separate drive units for both displacement machines or, when using only one drive unit that is connected to two displacement machines, to also turn a non-operating displacement machine such that a thusly created drag torque is completely eliminated and the efficiency is increased. The operation of the arrangement according to the invention is particularly simplified if the first displacement machine and the second displacement machine have essentially identical characteristics such that the drive unit essentially can drive both displacement machines with the same speed and no gear mechanism with different transmission ratios for the individual drive of different devices is required. A direct coupling with the displacement machine can be realized if a corresponding drive unit with suitable torque is used.

An arrangement of this type is particularly suitable for use in a modern commercial aircraft, in which several identical or very similar hydraulic subsystems are used for reasons of redundancy and supplied with hydraulic power by identical or very similar hydraulic pumps that are mechanically driven by main engines. Additional hydraulic pumps that are driven, for example, by electric motors serve for assisting the hydraulic pumps powered by the engines and can individually supply additionally required hydraulic power for a brief period of time during load peaks. The displacement machines of the motor-pump arrangement according to the invention may replace these additional hydraulic pumps. Their primary function does not consist of continuously supplying constant hydraulic power to the respective hydraulic subsystem, but merely of realizing an uninterrupted operation. This is the reason why it is not absolutely imperative to permanently drive the first and the second displacement machine with separate drive units because an intermittent operation realized with essentially identical speeds and different rotating directions by means of only one drive unit would suffice for such a hydraulic system. For example, if a hydraulic pump of a subsystem suffers a complete failure during a flight, an intermittent operation may also include the continuous operation during the remaining flying time.

In this context, the term hydraulic circuit refers to a closed, half-open or open circuit with at least one fluid or pressure source and one fluid or pressure sink, by means of which hydraulic consumers is drivable.

In an advantageous embodiment, the first displacement machine and the second displacement machine are respectively realized in the form of hydraulic pump units that are operable as hydraulic pumps in a pump mode. A fluid volume flow is directly initiated due to the rotation and leads to the supply of hydraulic power into the corresponding hydraulic (sub)system.

The first displacement machine and the second displacement machine are respectively realized in the form of hydraulic motor-pump units that are operable as hydraulic motors in a motor mode and as hydraulic pumps in a pump mode. The displacement machines convey a hydraulic fluid when they are acted upon with mechanical power, wherein a rotation takes place when they are acted upon with a pressurized fluid. The advantage of such a design can be seen in that not only the actual conversion of mechanical power into hydraulic power can be realized, but also the transfer of hydraulic power from one hydraulic subsystem into the other respective hydraulic subsystem. If both displacement machines are connected to two separate hydraulic subsystems that are completely independent of one another, one of the hydraulic subsystems could convert hydraulic power into mechanical power by means of a displacement machine that is connected to this hydraulic subsystem and realized in the form of a motor-pump unit, wherein the drive unit that is rendered passive transmits this mechanical power to the second displacement machine that is realized in the form of a motor-pump unit and in this instant operates as a hydraulic pump, and wherein the second displacement machine consequently converts the mechanical power into hydraulic power and supplies this hydraulic power to the second hydraulic subsystem. During the transfer of hydraulic power, the drive unit acts as a means for transmitting torques or mechanical power only. The transfer of hydraulic power between two hydraulic subsystems is promoted in that the displacement machines have different blocking directions due to the mechanical connection to free-wheels and therefore are designed for being operated as a pump or as a motor in respectively different rotating directions in the arrangement according to the invention.

In an advantageous embodiment, the drive unit therefore is passivatable in such a way that it allows the transmission of mechanical power between the first displacement machine and the second displacement machine in the form of a torque transmission means. In this case, rendering passive includes switching the drive unit into a non-driven state, in which the drive unit resists the rotation as little as possible. If the drive unit is realized in the form of an electric motor, the stator and/or the rotor should be electrically separated from external connections such that no antitorque can be created.

The arrangement according to the invention according to this embodiment could furthermore be used for replacing a conventional power transfer unit that comprises independent drive units for all displacement machines used. This can lead to significant weight savings in comparison with the multiple utilization of electric motors, hydraulic motors and hydraulic pumps that are not operated in conjunction with one another. In addition, this also reduces the manufacturing and maintenance costs because fewer components are required for the manufacture of a thusly equipped hydraulic system and the maintenance effort for the hydraulic system consequently is also reduced.

In an advantageous embodiment, at least the first or the second displacement machine comprises at its intake a switching valve that is designed for allowing a fluid flow during the operation of the arrangement according to the invention. The conventional operation of a hydraulic system with displacement machines for supplying additional hydraulic power is not affected when the switching valves are closed, but the respective switching valves render the displacement machines passive. The switching valves are preferably arranged between a connecting point to a high-pressure side and the respective displacement machine such that the displacement machine is protected from permanently present high pressure when it is rendered passive.

In an advantageous embodiment, the arrangement comprises two switch-over units that are designed for selectively switching a displacement machine into either a motor mode or a pump mode. In this way, it can be ensured that a hydraulic interconnection of displacement machines with hydraulic subsystems is only designed for either supplying hydraulic power or drawing hydraulic power. A switch-over unit could comprise, for example, two bypass lines and two solenoid valves, wherein said bypass lines respectively bypass a check valve at an intake or an outlet of the displacement machine and can be closed or opened by means of the solenoid valves. In addition, the check valves could also be replaced with solenoid valves that are opened when the respective bypass is closed.

In an advantageous embodiment of the invention, the two displacement machines are arranged coaxial to one another. Consequently, they respectively have principal directions that extend parallel to one another or coincide. Due to the selective rotating direction, both displacement machines are operable by a common shaft. The shaft could feature, for example, a torque transmission means that is connected to the drive unit. For example, gearwheels, pulleys, chain wheels or the like may be considered as torque transmission means.

In an advantageous embodiment, the drive unit is arranged between the first displacement machine and the second displacement machine. This results in a particularly compact design and a simple construction, e.g., because the drive unit may feature a continuous driveshaft that extends to the displacement machines on both sides.

In another advantageous embodiment of the invention, the drive unit is realized in the form of a controllable electric motor with variable rotating direction. Such a motor is preferably realized in the form of an asynchronous or synchronous A.C. motor and characterized by its robustness and high efficiency. Alternatively, the electric motor may be realized in the form of a preferably brushless D.C. motor that has a particularly high efficiency and can be easily controlled with respect to speed.

In an advantageous embodiment of the invention, the drive unit comprises a driveshaft that extends parallel to or coincides with a common direction, in which the displacement machines extend. Furthermore, the driveshaft preferably extends out of two opposite housing sides of the drive unit. Consequently, the drive unit is situated directly between the displacement machines and therefore can define a boundary of the arrangement according to the invention in the radial direction. If an electric motor is used as drive unit, a driveshaft that extends out of two housing sides can be very easily realized and furthermore simplifies the arrangement of two free-wheels on opposite housing sides. The ends of the driveshaft preferably feature connecting means that make it possible to easily transmit torques to the free-wheels. For example, tongue-and-groove connections, different forms of splines, cone fit systems and other known devices may be considered for this purpose.

The object of the invention is furthermore met by a hydraulic system that comprises at least one first hydraulic subsystem and one second hydraulic subsystem that are operable independently of one another and at least one arrangement according to the invention for selectively making available hydraulic power in separate hydraulic circuits, wherein the arrangement comprises a first displacement machine and a second displacement machine, and wherein the first displacement machine is fluidically connected to the first hydraulic subsystem and the second displacement machine is fluidically connected to the second hydraulic subsystem.

For the above-discussed reasons, the hydraulic system according to the invention may have a significantly lower weight than conventional hydraulic systems. The arrangement according to the invention makes it possible to temporarily compensate load peaks by selectively supplying hydraulic power into one respective hydraulic subsystem.

In order to enhance the redundancy, the arrangement according to the invention may also feature two arrangements for selectively making available hydraulic power that are connected to one another in parallel in one preferred embodiment. In this case, it would still be possible to realize a lower weight than in instances, in which a separate power transfer unit and additional hydraulic pumps driven by electric motors are used.

The invention furthermore relates to an aircraft that comprises a first engine, a second engine and a hydraulic system of the above-described type.

### BRIEF DESCRIPTION OF THE DRAWINGS

Other characteristics, advantages and potential applications of the present invention result from the following description of the exemplary embodiments and the figures. In this respect, all described and/or graphically illustrated characteristics form the object of the invention individually or in arbitrary combination, namely regardless of their composition in the individual claims or their references to other claims. In the figures, identical or similar objects are furthermore identified by the same reference symbols.
Figure 1a shows an arrangement according to the invention in the form of a schematic three-dimensional representation.
Figure 1b shows one possible embodiment of a free-wheel in the form of a plane sectional representation.
Figure 2 shows a hydraulic system of an aircraft that is equipped with the arrangement according to the invention.
Figure 3 shows an aircraft that comprises a hydraulic system according to Figure 2.

### DETAILED DESCRIPTION OF EXEMPLARY EMBODIMENTS

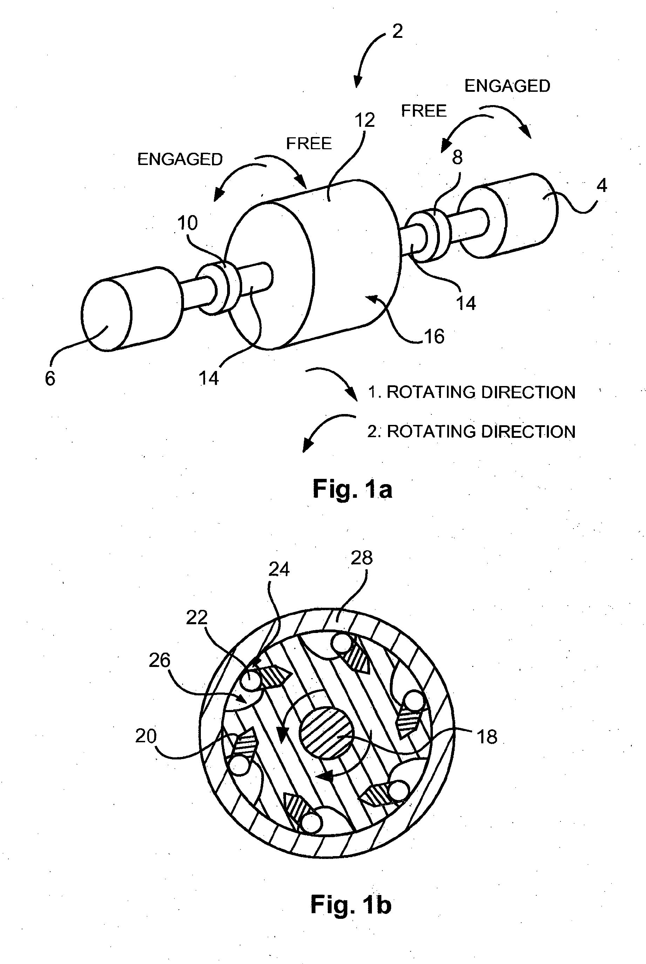

Figure 1a shows an arrangement 2 according to the invention that consists of a first displacement machine 4, a second displacement machine 6, a first free-wheel 8 and a second free-wheel 10, as well as a drive unit 12 realized in the form of an electric motor. The drive unit 12 comprises a driveshaft 14 that extends outward to both sides of the housing 16 of the electric motor 12 and is respectively connected to the first free-wheel 8 and the second free-wheel 10 outside the housing 16. It goes without saying that the two free-wheels 8 and 10 could also be arranged within the housing 16 and connected to other rotatable mechanical devices with the aid of corresponding connecting means, into which shafts can be inserted from outside, or outwardly extending stub shafts. In the embodiment shown, the first displacement machine 4 and the second displacement machine 6 are connected to the drive unit 12 by means of the first free-wheel 8 and the second free-wheel 10. The individual components are lined up concentric to one another along a common center axis, wherein the drive unit 12 is situated in a center of the arrangement 2 and driveshafts 14 respectively extend from the drive unit in both directions of the center axis.

According to the two arrows that indicate different rotating directions, the free-wheels 8 and 10 are designed such that they block in opposite directions, i.e., the drive unit 12 drives the first displacement machine 4 via the first free-wheel 8 in a first rotating direction while the drive unit 12 drives the second displacement machine 6 via the second free-wheel 10 in a second, opposite rotating direction. When one of the displacement machines 4 or 6 is driven, the respectively other free-wheel 8 or 10 freewheels such that it is not necessary to overcome an oppositely directed drag torque of a displacement machine 4 or 6 that is rendered passive and also turned in order to drive a single displacement machine 6 or 4.

The displacement machines 4 and 6 are realized, for example, in the form of motor-pump units that are operable as a pump and as a motor. The displacement machines are preferably realized in the form of axial piston machines with variable displacement volume. The conveyance of a hydraulic fluid from an intake to an outlet is respectively initiated by applying a torque to a shaft of the respective displacement machine 4 or 6. If a pressurized hydraulic fluid is supplied to an intake of the respective displacement machine 4 or 6, the utilization of the variable displacement volume causes a rotation with a rotational speed that depends on the displacement volume, as well as an applicable torque that is dependent thereon.

The first displacement machine 4 can be fluidically connected to a first (not-shown) hydraulic subsystem while the second displacement machine 6 can be fluidically connected to a second hydraulic subsystem. In this context, fluidically connected means that the corresponding intakes and outlets of the displacement machines 4 and 6 are connected to fluid lines of the respective hydraulic subsystems and allow fluid to move from and to the fluid lines. One respective displacement machine 4 or 6 therefore can supply or receive hydraulic power into/from one respective subsystem. The coupling with the respective free-wheel 8 or 10 therefore makes it possible to selectively supply hydraulic power into a first or into a second subsystem in dependence on the chosen rotating direction of the drive unit 12.

The functional principle of one possible free-wheel 8 or 10 is illustrated in Figure 1b, wherein this illustration is not intended to suggest a restriction of the functional principle. A shaft body 18 is used as an input shaft that is driven by the driveshaft 14 via a clutch or entirely corresponds to the driveshaft 14 depending on the design and the encapsulation. Depending on the rotating direction of the shaft body 18, it should be possible to transmit a torque to an output shaft in dependence on the rotating direction of the shaft body 18. For this purpose, the rotation of the shaft body 18 is initially transmitted to a disk 20, in which movably supported clamping bodies 22 are arranged and pressed radially outward by means of spring elements. The clamping bodies 22 lie in depressions that, due to asymmetrically arranged flanks 24 and 26, allow a free motion or rolling motion in one direction, but cause jamming on a peripheral ring 28 in the other direction. In the latter instance, jamming occurs between the shaft body 18 and the peripheral ring 28 such that the corresponding torque is transmitted. The peripheral ring 28 can be connected to the respective displacement machine 4 or 6 by means of a suitable shaft connection. Such free-wheels 8 or 10 are practically maintenance-free and highly reliable. The clamping bodies 22 may be realized in the form of balls, rolls or rollers. Alternatively, it would also be possible to use pawls that cooperate with toothed depressions and are highly efficient, but also generate a certain amount of noise when freewheeling.

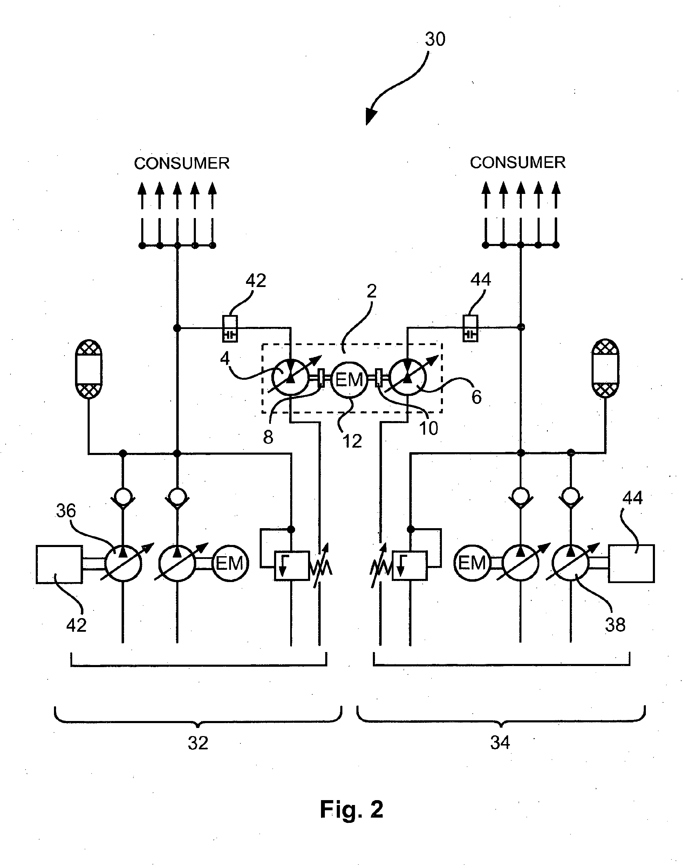

Figure 2 shows a hydraulic system 30 that consists, for example, of a first hydraulic subsystem 32 and a second hydraulic subsystem 34. Each hydraulic subsystem 32 and 34 t, for example, an engine-powered hydraulic pump 36 or 38 that respectively represent a primary means for making available hydraulic power in the respective hydraulic subsystem 32 or 34 and are realized, for example, in the form of variable displacement pumps with variable volume flow, e.g., in the form of axial piston machines. Load peaks that regularly occur for a limited period of time only during the course of a flight mission can be managed with the aid of the arrangement 2 according to the invention integrated into the hydraulic system 30. The exemplary displacement machines 4 and 6 in the form of motor-pump units are designed for operating as a motor, as well as a pump. The operation of the exemplary drive unit 12 in the form of an electric motor in a first or a second rotating direction drives either the displacement machine 4 or 6 and respectively makes available additional hydraulic power in the form of a fluid volume flow and a certain pressure level in the corresponding hydraulic subsystem 32 or 36.

If significant excess hydraulic power is available in one of the two hydraulic subsystems 32 or 34 during the operation of the hydraulic system 30, e.g., due to only slight power consumption, while the hydraulic power in the other hydraulic subsystem 34 or 32 is not quite sufficient, it would be possible to realize a power transfer with the aid of the arrangement 2 according to the invention. In this case, the first displacement machine 4 or the second displacement machine 6 respectively needs to operate as a motor that drives the respectively opposite displacement machine 6 or 4. In order to transfer mechanical power between the two pump units, the drive unit 12 is rendered passive and merely used as a connecting or coupling means or a torque transmission means due to the rigid mechanical coupling of the outwardly protruding driveshafts 14. The independent rotation of a displacement machine 4 or 6 causes the corresponding free-wheel to block in a rotating direction, in which the respectively other displacement machine 6 or 4 is driven, namely because the rotating direction relative to the drive unit 12 corresponds to the rotation of the drive unit 12 in the respectively opposite rotating direction. With reference to a drive unit 12 in the form of an electric motor, rendering passive means, for example, switching off and separating the drive unit 12 from the voltage supply. In this case, the drive unit 12 should, if possible, be separated from external connections such that no magnetically induced antitorque can be created.

Since a displacement machine 4 or 6 is driven by the respectively other displacement machine 6 or 4, hydraulic power is drawn from one of the hydraulic subsystems 32 or 34 and at least largely supplied to the hydraulic subsystem 34 or 32 requiring hydraulic power in order to briefly make available the needed additional hydraulic power.

Switching valves 42 and 44 are provided in order to render the arrangement 2 passive and respectively arranged between a high-pressure connection and the corresponding displacement machine 4, 6. In order to initiate the operation of the arrangement 2, the switching valves 42 and 44 need to be opened such that they allow a fluid volume flow.

Due to this multifunctional approach to managing load peaks, the weight can be significantly reduced in comparison with conventional power transfer units.

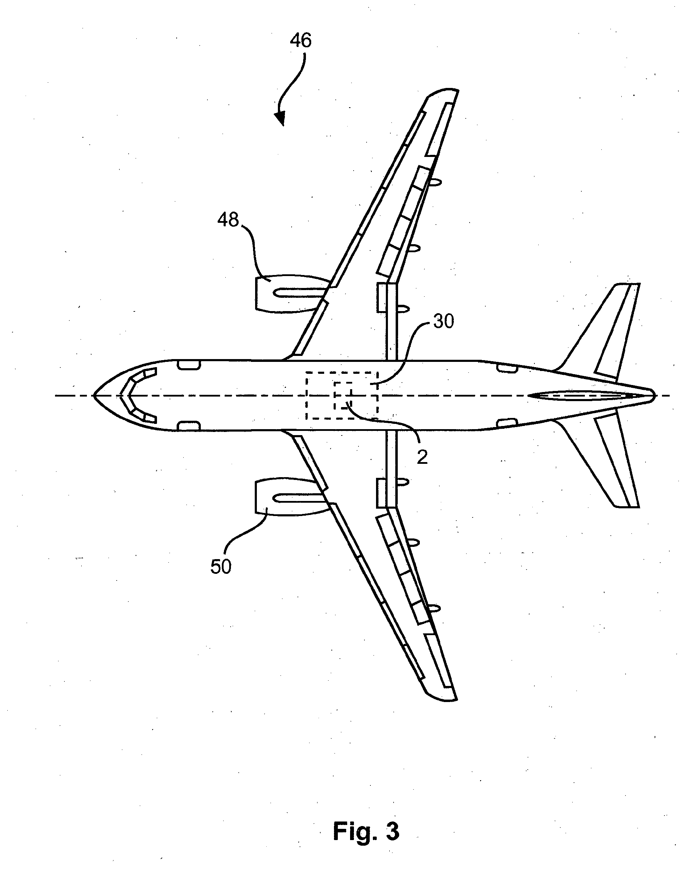

This weight reduction is particularly sensible when the hydraulic system 30 shown is used in an aircraft 46 according to Figure 3. The engines 48 and 50 drive hydraulic pumps 36 and 38 that satisfy a basic demand and primarily make available hydraulic power, wherein said hydraulic pumps are supplemented with a motor-pump arrangement 2 according to the invention for compensating load peaks and for transferring hydraulic power between hydraulic subsystems 32 and 34.

As a supplement, it should be noted that "comprising" does not exclude any other elements or steps, and that "a" or "an" does not exclude a plurality. It should furthermore be noted that characteristics that were described with reference to one of the above exemplary embodiments can also be used in combination with other characteristics of other above-described exemplary embodiments. Reference symbols in the claims should not be interpreted in a restrictive sense.

## Claims

1. An arrangement (2) for selectively making available hydraulic power in separate hydraulic circuits, comprising
- a first displacement machine (4),
- a second displacement machine (6),
- a first free-wheel (8),
- a second free-wheel (10) and
- a drive unit (12),
wherein the drive unit (12) is connected to the first displacement machine (4) by,means of the first free-wheel (8) and to the second displacement machine (6) by means of the second free-wheel (10), and
wherein the first free-wheel (8) and the second free-wheel (10) are designed such that the first displacement machine (4) is drivable in a first rotating direction of the drive unit (12) and the second displacement machine (6) is drivable in a second, opposite rotating direction of the drive unit (12), and
wherein the first displacement machine (4) and the second displacement machine (6) are respectively realized in the form of hydraulic motor-pump units that are operable as hydraulic motors in a motor mode and as hydraulic pumps in a pump mode.

2. The arrangement (2) of claim 1,
wherein the drive unit (12) is passivatable such that it allows the transfer of mechanical power between the first displacement machine (4) and the second displacement machine (6) in the form of a torque transfer means.

3. The arrangement (2) of claim 1 or 2,
wherein at least the first or the second displacement machine (4, 6) comprises at its intake a switching valve (42, 44) that is designed for allowing a fluid flow during the operation of the arrangement (2).

4. The arrangement (2) of claim 1, furthermore comprising two switch-over units that are designed for selectively switching a displacement machine (4, 6) into a motor mode or a pump mode.

5. The arrangement (2) of one of the preceding claims, wherein the displacement machines (4, 6) are arranged coaxial to one another.

6. The arrangement (2) of claim 5, wherein the drive unit (12) is arranged between the first displacement machine (4) and the second displacement machine (6).

7. The arrangement (2) of one of the preceding claims, wherein the drive unit (12) is realized in the form of a controllable electric motor with variable rotating direction.

8. The arrangement (2) of one of the preceding claims, wherein the drive unit (12) comprises a driveshaft (14) that extends parallel to or coincides with a common direction, in which the displacement machines (4, 6) extend, and wherein said driveshaft furthermore extends out of two opposite housing sides of the drive unit (12).

9. A hydraulic system (30), comprising
- at least one first hydraulic subsystem (32) and at least one second hydraulic subsystem (34) that are operable independently of one another, and
- at least one arrangement (2) for selectively making available hydraulic power in separate hydraulic circuits of one of claims 1 to 10,
wherein the arrangement (2) comprises a first displacement machine (4) and a second displacement machine (6), and wherein the first displacement machine (4) is fluidically connected to the first hydraulic subsystem (32) and the second displacement machine (6) is fluidically connected to the second hydraulic subsystem (34).

10. The hydraulic system (30) of claim 9, comprising two arrangements (2) for selectively making available hydraulic power.

11. The hydraulic system (30) of claim 10, wherein both arrangements (2) are connected to one another in parallel.

12. An aircraft (46), comprising a first engine (48), a second engine (50) and a hydraulic system (30) of one of claims 9 to 11.

## Patentansprüche

1. Anordnung (2) zum selektiven Bereitstellen von hydraulischer Leistung in getrennten Hydraulikkreisläufen, aufweisend
- eine erste Verdrängermaschine (4),
- eine zweite Verdrängermaschine (6),
- einen ersten Freilauf (8),
- einen zweiten Freilauf (10) und
- eine Antriebseinheit (12),
wobei die Antriebseinheit (12) über den ersten Freilauf (8) mit der ersten Verdrängermaschine (4) und über den zweiten Freilauf (10) mit der zweiten Verdrängermaschine (6) verbunden ist,
wobei der erste Freilauf (8) und der zweite Freilauf (10) derart eingerichtet sind, dass die erste Verdrängermaschine (4) bei einer ersten Drehrichtung der Antriebseinheit (12) antreibbar ist und die zweite Verdrängermaschine (6) bei einer entgegengesetzten, zweiten Drehrichtung der Antriebseinheit (12) antreibbar ist, und
wobei die erste Verdrängermaschine (4) und die zweite Verdrängermaschine (6) jeweils als hydraulische Motor-Pumpen-Einheiten ausgeführt sind, die sowohl als hydraulischer Motor in einem Motorbetrieb als auch als hydraulische Pumpe in einem Pumpbetrieb betreibbar sind.

2. Anordnung (2) nach Anspruch 1,
wobei die Antriebseinheit (12) derart passivierbar ist, dass sie als Drehmomentübertragungsmittel die Übertragung von mechanischer Leistung zwischen der ersten Verdrängermaschine (4) und der zweiten Verdrängermaschine (6) erlaubt.

3. Anordnung (2) nach Anspruch 1 oder 2,
wobei mindestens die erste oder die zweite Verdrängermaschine (4, 6) an einem Eingang ein Schaltventil (42, 44) aufweist, das dazu eingerichtet ist, bei Betrieb der Anordnung (2) einen Fluidstrom zuzulassen.

4. Anordnung (2) nach Anspruch 1, ferner aufweisend zwei Umschalteinheiten, die dazu eingerichtet sind, selektiv eine Verdrängermaschine (4, 6) in einen Motor- oder Pumpbetrieb zu versetzen.

5. Anordnung (2) nach einem der vorhergehenden Ansprüche, wobei die Verdrängermaschinen (4, 6) koaxial zueinander angeordnet sind.

6. Anordnung (2) nach Anspruch 5, wobei die Antriebseinheit (12) zwischen der ersten Verdrängermaschine (4) und der zweiten Verdrängermaschine (6) angeordnet ist.

7. Anordnung (2) nach einem der vorhergehenden Ansprüche, wobei die Antriebseinheit (12) als ein Elektromotor ausgeführt ist, der drehrichtungsvariabel ansteuerbar ist.

8. Anordnung (2) nach einem der vorhergehenden Ansprüche, wobei die Antriebseinheit (12) eine Antriebswelle (14) aufweist, die parallel zu einer gemeinsamen Erstreckungsrichtung der Verdrängermaschinen (4, 6) verläuft oder damit zusammenfällt und ferner aus zwei einander gegenüberliegenden Gehäuseseiten der Antriebseinheit (12) austritt.

9. Hydrauliksystem (30), aufweisend
- mindestens ein erstes Hydraulik-Teilsystem (32) und mindestens ein zweites Hydraulik-Teilsystem (34), die voneinander unabhängig betreibbar sind, und
- mindestens eine Anordnung (2) zum selektiven Bereitstellen von hydraulischer Leistung in getrennten Hydraulik-Kreisläufen nach einem der Ansprüche 1 bis 10,
wobei die Anordnung (2) eine erste Verdrängermaschine (4) und eine zweite Verdrängermaschine (6) aufweist, und wobei die erste Verdrängermaschine (4) mit dem ersten Hydraulik-Teilsystem (32) und die zweite Verdrängermaschine (6) mit dem zweiten Hydraulik-Teilsystem (34) eine Fluidverbindung eingehen.

10. Hydrauliksystem (30) nach Anspruch 9, das zwei Anordnungen (2) zum selektiven Bereitstellen hydraulischer Leistung aufweist.

11. Hydrauliksystem (30) nach Anspruch 10, wobei die beiden Anordnungen (2) parallel zueinander verschaltet sind.

12. Flugzeug (46), aufweisend ein erstes Triebwerk (48), ein zweites Triebwerk (50) und ein Hydrauliksystem (30) nach einem der Ansprüche 9 bis 11.

## Revendications

1. Agencement (2) destiné à rendre disponible sélectivement une puissance hydraulique dans des circuits hydrauliques séparés, comprenant :
- une première machine volumétrique (4),
- une seconde machine volumétrique (6),
- une première roue libre (8),
- une seconde roue libre (10) et
- une unité d'entraînement (12),
dans lequel l'unité d'entraînement (12) est reliée à la première machine volumétrique (4) au moyen de la première roue libre (8) et à la seconde machine volumétrique (6) au moyen de la seconde roue libre (10), et
dans lequel la première roue libre (8) et la seconde roue libre (10) sont conçues de telle sorte que la première machine volumétrique (4) peut être commandée dans un premier sens de rotation de l'unité d'entraînement (12) et la seconde machine volumétrique (6) peut être commandée dans un second sens de rotation opposé de l'unité d'entraînement (12), et
dans lequel la première machine volumétrique (4) et la seconde machine volumétrique (6) sont réalisées respectivement sous la forme de groupes moteurs-pompes hydrauliques qui peuvent fonctionner sous la forme de moteurs hydrauliques dans un mode moteur et sous la forme de pompes hydrauliques dans un mode pompe.

2. Agencement (2) selon la revendication 1,
dans lequel l'unité d'entraînement (12) peut être rendue passive, de telle sorte qu'elle permet le transfert de puissance mécanique entre la première machine volumétrique (4) et la seconde machine (6) sous la forme d'un moyen de transfert de couple.

3. Agencement (2) selon la revendication 1 ou 2,
dans lequel au moins la première ou la seconde machine volumétrique (4, 6) comprend, au niveau de son admission, une soupape de commutation (42, 44) qui est conçue pour permettre l'écoulement d'un fluide pendant le fonctionnement de l'agencement (2).

4. Agencement (2) selon la revendication 1, comprenant en outre deux unités de commutation qui sont conçues pour commuter sélectivement une machine volumétrique (4, 6) dans un mode moteur ou un mode pompe.

5. Agencement (2) selon l'une des revendications précédentes, dans lequel les machines volumétriques (4, 6) sont agencées coaxialement l'une par rapport à l'autre.

6. Agencement (2) selon la revendication 5, dans lequel l'unité d'entraînement (12) est agencée entre la première machine volumétrique (4) et la seconde machine volumétrique (6).

7. Agencement (2) selon l'une des revendications précédentes, dans lequel l'unité d'entraînement (12) est réalisée sous la forme d'un moteur électrique contrôlable avec un sens de rotation variable.

8. Agencement (2) selon l'une des revendications précédentes, dans lequel l'unité d'entraînement (12) comprend un arbre d'entraînement (14) qui s'étend parallèlement à un sens commun, dans lequel les machines volumétriques (4, 6) s'étendent, ou coïncide avec ce sens commun, et dans lequel ledit arbre d'entraînement s'étend en outre en dehors de deux côtés de logement opposés de l'unité d'entraînement (12).

9. Système hydraulique (30), comprenant :
- au moins un premier sous-système hydraulique (32) et au moins un second sous-système hydraulique (34) qui peuvent fonctionner indépendamment l'un de l'autre, et
- au moins un agencement (2) destiné à rendre disponible sélectivement une puissance hydraulique dans des circuits hydrauliques séparés selon l'une des revendications 1 à 10,
dans lequel l'agencement (2) comprend une première machine volumétrique (4) et une première machine volumétrique (6), et dans lequel la première machine volumétrique (4) est reliée de manière fluidique au premier sous-système hydraulique (32) et la seconde machine volumétrique (6) est reliée de manière fluidique au second sous-système hydraulique (34).

10. Système hydraulique (30) selon la revendication 9, comprenant deux agencements (2) destinés à rendre disponible sélectivement une puissance hydraulique.

11. Système hydraulique (30) selon la revendication 10, dans lequel les deux agencements (2) sont reliés l'un à l'autre en parallèle.

12. Aéronef (46), comprenant un premier moteur (48), un second moteur (50) et un système hydraulique (30) selon l'une des revendications 9 à 11.
